# FASCICULE DE BREVET EUROPEEN

(11) **EP 3 055 589 B1**
(45) Date de publication et mention de la délivrance du brevet: **14.02.2018**
(21) Numéro de dépôt: 14799189.7
(22) Date de dépôt: 09.10.2014
(51) Int. Cl.: F16H 57/08, F16H 1/28

(54) **PORTE-SATELLITES POUR UN RÉDUCTEUR DE VITESSE À TRAIN ÉPICYCLOÏDAL**
PLANETENTRÄGER FÜR EIN EPIZYKLISCHES UNTERSETZUNGSGETRIEBE
PLANET CARRIER FOR AN EPICYCLIC SPEED REDUCTION GEAR

(30) Priorité: 10.10.2013 FR 1359845
(43) Date de publication de la demande: 17.08.2016
(73) Titulaire: Safran Transmission Systems, 92700 Colombes (FR)
(72) Inventeur: BECK, Guillaume, 60500 Chantilly (FR); MORELLI, Boris, 75014 Paris (FR); PELTIER, Jordane, 77550 MOISSY-CRAMAYEL (FR)
(74) Mandataire: Robert, Mathias
(86) Numéro de dépôt international: PCT/FR2014/052553
(87) Numéro de publication internationale: WO 2015/052437

(56) Documents cités:
- EP-A1- 0 271 416
- DE-A1- 10 239 084
- US-A1- 2003 114 267
- US-A1- 2010 197 445
- US-A1- 2013 017 924

## Description

La présente invention concerne un porte-satellites pour un réducteur de vitesse à train épicycloïdal, destiné à équiper notamment un turbopropulseur ou une turbomachine d'avion.

Un réducteur de vitesse est constitué principalement d'un planétaire interne (également appelé soleil) entraîné par un arbre d'entrée, par exemple un arbre de turbine, un planétaire externe (également appelé couronne), coaxial au planétaire interne, des satellites engrenant à la fois avec le planétaire interne et avec le planétaire externe, et un porte-satellites sur lequel les satellites sont montés rotatifs.

La variation du rapport de réduction d'un tel réducteur s'obtient par la modification du nombre de dents du planétaire interne, des satellites et du planétaire externe, et par l'architecture du réducteur. Il existe en effet deux types de réducteurs :
- le réducteur à train planétaire dans lequel le porte-satellites est fixe et le planétaire externe ou couronne est libre en rotation. La plage de fonctionnement optimisée de ce type de réducteur correspond à un rapport de réduction compris entre 1 et 3,
- le réducteur à train épicycloïdal dans lequel la couronne est fixe et le porte-satellites est libre en rotation. La plage de fonctionnement optimisée de ce type de réducteur correspond à un rapport de réduction supérieur à 3.

L'invention concerne en particulier le domaine des réducteurs à train épicycloïdal.

Dans ce cas en particulier, il est important que le porte-satellites permette de maintenir le bon positionnement des satellites, malgré les déformations subies par le porte-satellites en fonctionnement.

En effet, lorsque le couple transmis est important, ceci peut provoquer une torsion du portes-satellites et, par voie de conséquence, un désalignement des axes des satellites. Par ailleurs, les satellites peuvent être soumis à des forces centrifuges importantes, pouvant là encore générer un désalignement des satellites.

Ces désalignements peuvent notamment provoquer une usure prématurée des engrenages et du réducteur de vitesses.

Afin de remédier en partie à ce problème, le document US 5 391 125 propose un réducteur de vitesse à train épicycloïdal dans lequel le porte-satellites comporte une cage annulaire comportant deux flancs s'étendant radialement, reliés par des pontets, des sièges s'étendant axialement entre les flancs et étant destinés à supporter des satellites montés de façon rotative autour des sièges. Le porte-satellites comporte en outre un organe de sortie de couple dont une extrémité est équipée de bras axiaux fixés aux différents pontets de la cage par l'intermédiaire de broches.

La demande de brevet FR 2 853 382, au nom de la Demanderesse, divulgue un réducteur de vitesse à l'architecture similaire, dans lequel les bras de l'organe de sortie de couple sont reliés aux pontets par l'intermédiaire de liaisons sphériques à doigts, de manière à autoriser localement une rotation libre de la cage par rapport au doigt, autour de la liaison sphérique et réduire encore les déformations du porte-satellites en fonctionnement.

Ce type de réducteur de vitesse présente les inconvénients suivants.

Tout d'abord, le dimensionnement des portes-satellites correspondants est complexe pour les réducteurs devant transmettre des couples très importants, car il existe des zones de concentration de contraintes importantes.

En outre, le fait que le porte-satellites soit composé de deux éléments (cage et organe de sortie de couple) assemblés l'un à l'autre par des organes de liaison tels que des broches, génère une masse importante, pose des problèmes spécifiques de montage ainsi que des problèmes dus à l'hyperstaticité du système.

Enfin, la présence d'organes additionnels de liaison entre la cage et l'organe de sortie de couple dégrade la fiabilité du système.

De tels inconvénients sont également présents dans le porte-satellites du document US 2003/0114267, comportant de nombreuses pièces assemblées les unes aux autres, par l'intermédiaire de plots assemblés à la presse.

Il est également connu d'équiper le porte-satellites d'un réducteur de vitesse avec des paliers dits rotulants, tels par exemple que des paliers à rouleaux sphériques, de manière à compenser dans une certaine mesure d'éventuelles déformations du porte-satellites.

Ces paliers ne peuvent toutefois pas être fortement chargés.

En effet, ces paliers ont une capacité de charge plus faible que les technologies employées habituellement (rapport charge supportée sur volume du roulement). Par conséquent, leur utilisation impose une augmentation générale du volume de l'ensemble du train épicycloïdal, ce qui est pénalisant en termes d'encombrement et de masse.

Les documents US 2013/0017924, EP 0271416 et DE 102 39 084 divulguent chacun un porte-satellites comportant une cage annulaire comprenant un premier flanc et un second flanc s'étendant radialement, reliés par des pontets, des sièges destinés à supporter des satellites s'étendant axialement entre les flancs. Dans ces documents, la sortie de couple étant formée en périphérie interne du premier flanc, un premier chemin d'efforts traverse le premier flanc, depuis une première extrémité des sièges jusqu'à la périphérie interne du premier flanc. Un second chemin d'efforts traverse une partie du second flanc (des secondes extrémités des sièges jusqu'aux zones de liaison entre le second flanc et les pontets), les pontets, puis le premier flanc (depuis les zones de liaison entre les pontets et le premier flanc jusqu'à la périphérie radialement interne du premier flanc). On constate ainsi que le premier chemin d'efforts voit une raideur qui est dépendante de la raideur du premier flanc, tandis que le second chemin d'efforts voit une raideur qui est dépendante des raideurs du premier flanc, du second flanc et des pontets. Les raideurs vues par les deux chemins d'efforts étant sensiblement différentes, il se produit un désalignement des sièges, ce qui influe défavorablement sur la maîtrise des positions des satellites et donc de l'usure des engrenages associés.

L'invention a notamment pour but d'apporter une solution simple, efficace et économique à ces problèmes.

A cet effet, elle propose un porte-satellites pour un réducteur de vitesse à train épicycloïdal, comportant une cage annulaire comprenant deux flancs s'étendant radialement, reliés par des pontets, des sièges s'étendant axialement entre les flancs et étant destinés à supporter des satellites montés de façon rotative autour des sièges, caractérisé en ce que l'un des flancs de la cage est relié de façon indémontable à un organe de sortie de couple, de manière à former un même ensemble structurel, et en ce que l'organe de sortie de couple comporte une partie tubulaire s'étendant axialement, dont une extrémité est prolongée par une partie de liaison annulaire, s'étendant radialement et reliée au flanc correspondant de la cage, par exemple par soudage ou brasage, les deux flancs présentant des raideurs radiales identiques et des raideurs de torsion identiques.

La liaison indémontable entre la cage et l'organe de sortie de couple permet d'éviter tout problème de montage.

Sous l'effet des forces centrifuges, les deux flancs se déforment de la même façon, ce qui permet de conserver un bon alignement au niveau des sièges des satellites, et donc un bon positionnement des satellites.

Selon une forme de réalisation de l'invention, l'organe de sortie de couple et le flanc correspondant de la cage sont réalisés de façon monobloc.

Selon une autre forme de réalisation de l'invention, l'organe de sortie de couple et le flanc sont formés d'au moins deux pièces distinctes, assemblées l'une à l'autre par soudage ou brasage.

Bien entendu, d'autres modes d'assemblage peuvent être utilisés.

Dans les deux cas, on évite la présence d'éléments additionnels, et donc les contraintes de montage, de poids et d'encombrement qui sont liées à de tels éléments additionnels.

De préférence, les pontets s'étendent axialement depuis les périphéries radialement externes des flancs.

Dans ce cas, l'organe de sortie de couple est relié au flanc correspondant, le long d'une zone annulaire, située uniquement en périphérie radialement externe dudit flanc.

De cette manière, un premier chemin d'efforts traverse un premier flanc (à savoir le flanc relié directement à l'organe de sortie de couple), des extrémités correspondantes des sièges des satellites jusqu'à la zone de liaison entre le premier flanc et l'organe de sortie de couple, puis l'organe de sortie. Un second chemin d'efforts traverse le second flanc de la cage (des extrémités correspondantes des sièges des satellites jusqu'aux zones de liaison entre le second flanc et les pontets), les pontets puis l'organe de sortie de couple. De cette manière, il est possible d'ajuster la raideur de chacun des deux chemins d'efforts, en vue de contrôler les déformations dues à la transmission d'un couple important et les désalignements des sièges. Ceci permet de mieux maîtriser les positions des satellites, et donc l'usure des engrenages du réducteur. Dans ce cas également, les chemins d'efforts sont distincts.

Le fait que la zone de liaison soit annulaire, de préférence continue, permet d'éviter les effets de concentration de contrainte et vise à répartir uniformément les éventuelles déformations dues à la transmission d'un couple important en fonctionnement. Ceci permet également d'augmenter la rigidité de la liaison entre la cage et l'organe de sortie de couple.

L'organe de sortie de couple peut comporter une partie tubulaire s'étendant axialement, dont une extrémité est prolongée par une partie de liaison annulaire, s'étendant radialement et reliée au flanc correspondant de la cage.

Ladite partie de liaison annulaire est de préférence située radialement à l'extérieur des sièges, plus particulièrement en regard des pontets.

Dans ce cas, la partie de liaison peut comporter un rebord annulaire s'étendant axialement dont l'extrémité libre est reliée au flanc correspondant.

De préférence, les pontets et les flancs sont monoblocs.

L'invention concerne en outre un réducteur de vitesse à train épicycloïdal, notamment pour turbomachine d'avion, comportant un porte-satellites du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique de face d'un réducteur de vitesse à train épicycloïdal,
- la figure 2 est un schéma cinématique d'un réducteur de vitesse à train épicycloïdal,
- la figure 3 est une vue en perspective d'un porte-satellites selon l'invention,
- la figure 4 est une vue en perspective de l'organe de sortie de couple et du porte-satellites de la figure 3,
- la figure 5 est une vue en perspective de la cage du porte-satellites de la figure 3,
- la figure 6 est un vue en coupe axiale du porte-satellites de la figure 3.

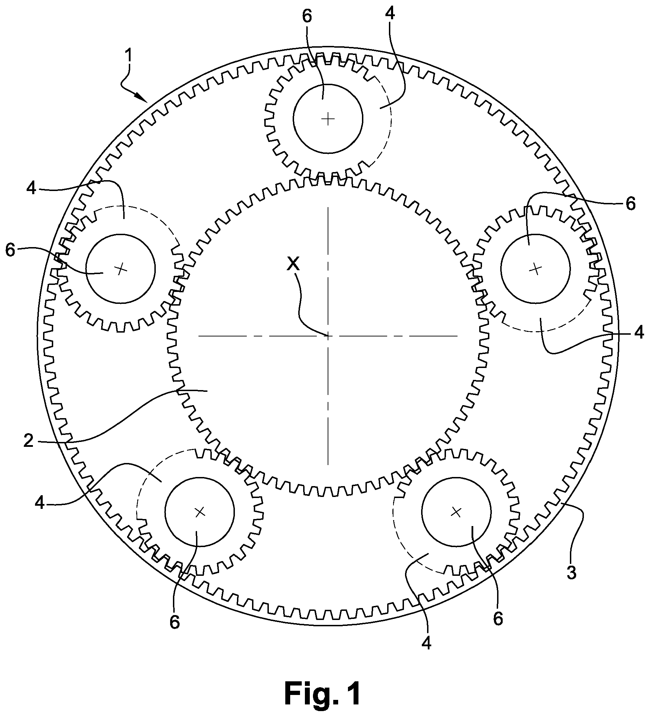

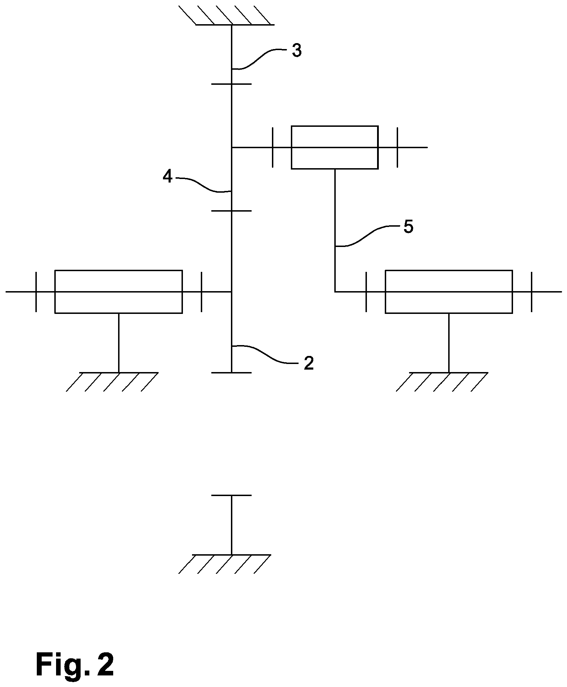

Les figures 1 et 2 illustrent la structure générale d'un réducteur de vitesse à train épicycloïdal 1. Un tel réducteur 1 comporte classiquement un planétaire interne 2 (également appelé soleil) entraîné par un arbre d'entrée, par exemple un arbre de turbine, un planétaire externe 3 (également appelé couronne), coaxial au planétaire interne, des satellites 4 engrenant à la fois avec le planétaire interne 2 et avec le planétaire externe 3, et un porte-satellites 5 comportant des sièges 6 autour desquels les satellites 4 sont montés rotatifs.

Comme cela est visible à la figure 2, dans un réducteur à train épicycloïdal 1, la couronne 3 est fixe et le porte-satellites 5 est libre en rotation. La plage de fonctionnement optimisée de ce type de réducteur 1 correspond à un rapport de réduction supérieur à 3. Le porte-satellites 5 est par exemple couplé en rotation à une hélice (dans le cas d'un turbopropulseur) ou à une roue de soufflante (dans le cas d'une turbomachine).

Comme indiqué précédemment, il est important que le porte-satellites 5 permette de maintenir le bon positionnement des satellites 4, malgré les déformations subies par le porte-satellites 5 en fonctionnement.

En effet, lorsque le couple transmis au travers du réducteur 1 est important, ceci peut provoquer une torsion du portes-satellites 5 et, par voie de conséquence, un désalignement des axes des satellites 4. Par ailleurs, les forces centrifuges peuvent également générer une déformation du porte-satellites 5, pouvant là encore générer un désalignement des satellites 4.

Ces désalignements peuvent notamment provoquer une usure prématurée des engrenages et du réducteur de vitesse 1.

L'invention propose un porte-satellites 5 pour train épicycloïdal permettant de remédier à ce problème.

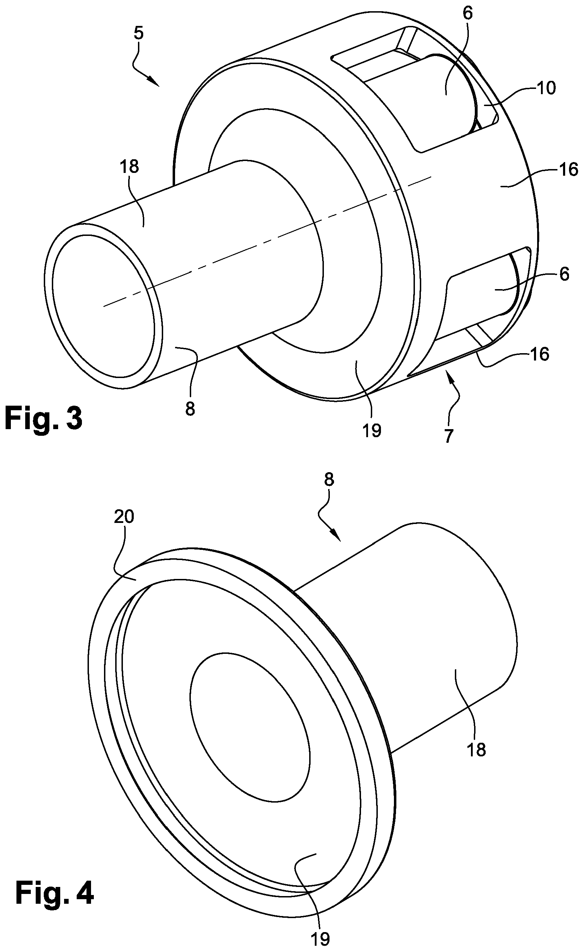

Comme cela est visible aux figures 3 à 6, le porte-satellites 5 selon l'invention comporte une cage annulaire 7 et un organe de sortie de couple 8.

La cage annulaire 7 comporte deux flancs 9, 10 s'étendant radialement, respectivement un flanc avant 9 et un flanc arrière 10. Chaque flanc 9, 10 comporte un bord périphérique externe circulaire et un bord périphérique interne. Le flanc avant 9 comporte des trous servant chacun au montage d'une extrémité 12 d'un arbre creux formant un siège 6 autour duquel un satellite 4 est destiné à être monté rotatif. Le flanc arrière 10 comporte des ouvertures 13 permettant chacune l'insertion de l'arbre correspondant, de l'arrière vers l'avant. Un couvercle 14 referme chaque ouverture 13, la seconde extrémité 15 de l'arbre correspondant 6 étant montée dans une ouverture dudit couvercle 14.

Chaque arbre 6 ainsi maintenu fixement entre les deux flancs 9, 10 de la cage 7. Dans la forme de réalisation illustrée aux figures 3 à 6, le porte-satellites 5 comporte cinq arbres creux 6, fixés aux flancs 9, 10 et aux couvercles 14.

Les périphéries radialement externe des flancs 9, 10 sont reliées par des pontets 16 s'étendant axialement, intercalés circonférentiellement entre les arbres creux 6 et régulièrement répartis sur la circonférence.

Les flancs 9, 10 et les pontets 16 sont réalisés de façon monobloc, c'est-à-dire en une seule et même pièce.

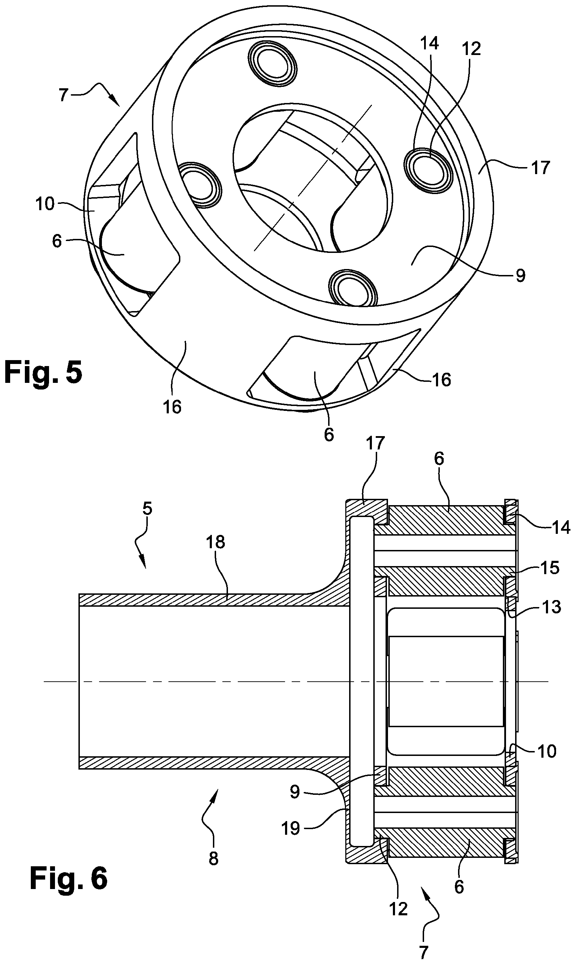

La périphérie radialement externe du flanc avant 9 comporte un rebord annulaire 17 (figure 5) s'étendant de façon continue sur toute la circonférence du flanc avant 9 et s'étendant axialement à l'opposé du flanc arrière.

L'organe de sortie de couple 8 est fixé à la cage 7. Plus particulièrement, l'organe de sortie de couple 8 comporte une partie creuse 18 s'étendant axialement, globalement cylindrique ou tronconique, dont une extrémité est prolongée par une partie de liaison annulaire 19 s'étendant radialement vers l'extérieur.

La partie radialement externe de la partie de liaison 19 comporte un rebord annulaire 20 (figure 4) s'étendant de façon continue sur toute la circonférence du de la partie de liaison 19 et s'étendant axialement en direction du flanc avant 9.

Selon une forme de réalisation de l'invention, l'extrémité libre du rebord 20 de la partie de liaison 19 est fixée par soudage ou brasage à l'extrémité libre du rebord 17 du flanc avant 9. D'autres modes d'assemblage peuvent être utilisés.

Selon une autre forme de réalisation (figure 6), la cage 7 et l'organe de sortie de couple 8 sont formés d'une seule et même pièce.
Comme indiqué précédemment, en fonctionnement, un premier chemin d'efforts traverse le flanc avant 9 (des extrémités correspondantes 12 des sièges 6 des satellites 4 jusqu'au rebord 17), puis l'organe de sortie 8. Un second chemin d'efforts traverse le flanc arrière 10 (des extrémités correspondantes 15 des sièges 6 des satellites 4 jusqu'aux zones de liaison entre le flanc arrière 10 et les pontets 16), les pontets 16 puis l'organe de sortie de couple 8.

De préférence, les deux flancs 9, 10 présentent des raideurs radiales sensiblement identiques. Ainsi, en fonctionnement, les deux flancs 9, 10 subissent les mêmes déformations sous l'effet des efforts centrifuges.

Les pontets 16 sont par ailleurs conçus pour leur conférer une raideur en torsion importante. Ainsi, les déformations subies par les éléments sollicités respectivement par les premier et second chemins d'efforts sont sensiblement identiques.

En pratique, le second chemin d'effort est légèrement moins rigide en torsion que le premier chemin d'effort (la rigidité des pontets 16 n'étant pas infinie), cette différence de raideur pouvant être aisément compensée par une correction appropriée des dentures des satellites 4 et/ou des planétaires interne et externe 2, 3.
On garantit ainsi que les flancs avant et arrière 9, 10 se déforment globalement de la même façon en fonctionnement, aussi bien sous l'effet des forces centrifuges que sous l'effet d'un couple important à transmettre. Ceci permet de maintenir un bon alignement des extrémités 12, 15 des arbres 6, c'est-à-dire un bon alignement des satellites 4 par rapport au planétaire interne 2 et au planétaire externe 3 du réducteur de vitesse à train épicycloïdal 1. L'usure des engrenages d'un tel réducteur de vitesse 1 est alors sensiblement réduite.

Le fait que la zone de liaison entre l'organe de sortie 8 et le flanc avant 9 soit annulaire, de préférence continue, permet d'éviter les effets de concentration de contraintes et vise à répartir uniformément les éventuelles déformations dues à la transmission d'un couple important en fonctionnement. Une telle liaison présente également une rigidité importante.

Enfin, le porte-satellites 5 forme un seul ensemble structurel, ce qui élimine les problèmes liés à l'assemblage de plusieurs pièces par l'intermédiaire d'organes de liaison additionnels, à savoir la fiabilité et le dimensionnement des organes de liaison, le balourd généré par les tolérances d'assemblage, les problèmes de montage dus à l'hyperstatisme des pièces, ou encore la masse supplémentaire due à la multiplication des pièces.

## Revendications

1. Porte-satellites (5) pour un réducteur de vitesse à train épicycloïdal, comportant une cage annulaire (7) comprenant deux flancs (9, 10) s'étendant radialement, reliés par des pontets (16), des sièges (6) s'étendant axialement entre les flancs (9, 10) et étant destinés à supporter des satellites (4) montés de façon rotative autour des sièges (6), **caractérisé en ce que** l'un (9) des flancs (9, 10) de la cage (7) est relié de façon indémontable à un organe de sortie de couple (8), de manière à former un même ensemble structurel, et **en ce que** l'organe de sortie de couple (8) comporte une partie tubulaire (18) s'étendant axialement, dont une extrémité est prolongée par une partie de liaison annulaire (19), s'étendant radialement et reliée au flanc correspondant (9) de la cage (7), par exemple par soudage ou brasage, les deux flancs (9, 10) présentant des raideurs radiales identiques et des raideurs de torsion identiques.

2. Porte-satellites (5) selon la revendication 1, **caractérisé en ce que** ladite partie de liaison annulaire (19) est située radialement à l'extérieur des sièges, de préférence en regard des pontets (16).

3. Porte-satellites (5) selon la revendication 1 ou 2, **caractérisé en ce que** la partie de liaison annulaire (19) de l'organe de sortie de couple (8) et le flanc (9) sont assemblés l'un à l'autre par soudage ou brasage.

4. Porte-satellites (5) selon l'une des revendications 1 à 3, **caractérisé en ce que** les pontets (16) s'étendent axialement depuis les périphéries radialement externes des flancs (9, 10).

5. Porte-satellites (5) selon la revendication 4, **caractérisé en ce que** l'organe de sortie de couple (8) est relié au flanc correspondant (9), le long d'une zone annulaire (17, 20), située uniquement en périphérie radialement externe dudit flanc (9).

6. Porte-satellites (5) selon l'une des revendications 1 à 5, **caractérisé en ce que** la partie de liaison (19) comporte un rebord annulaire (20) s'étendant axialement dont l'extrémité libre est reliée au flanc correspondant (9).

7. Porte-satellites (5) selon l'une des revendications 1 à 6, **caractérisé en ce que** les pontets (16) et les flancs (9, 10) sont monoblocs.

8. Réducteur de vitesse à train épicycloïdal (1), notamment pour turbomachine d'avion, comportant un porte-satellites (5) selon l'une des revendications 1 à 7.

## Patentansprüche

1. Planetenträger (5) für ein Untersetzungsgetriebe mit Planetengetriebe, enthaltend einen ringförmigen Käfig (7) mit zwei Flanken (9, 10), die sich radial erstrecken und über Bügel (16) verbunden sind, und Sitze (6), die sich axial zwischen den Flanken (9, 10) erstrecken und dazu bestimmt sind, Planetenräder (4) zu lagern, die um die Sitze (6) drehbar gelagert sind,
**dadurch gekennzeichnet, dass** eine (9) der Flanken (9, 10) des Käfigs (7) unlösbar mit einem Abtriebsglied (8) verbunden ist, so dass eine gleiche Baugruppe gebildet wird, und dass das Abtriebsglied (8) einen Rohrabschnitt (18) aufweist, der sich axial erstreckt und von dem ein Ende von einem ringförmigen Verbindungsabschnitt (19) fortgesetzt wird, der sich radial erstreckt und mit der entsprechenden Flanke (9) des Käfigs (7) verbunden ist, beispielsweise durch Verschweißen oder Verlöten, wobei die beiden Flanken (9, 10) identische radiale Steifigkeiten und identische Torsionssteifigkeit aufweisen.

2. Planetenträger (5) nach Anspruch 1, **dadurch gekennzeichnet, dass** der ringförmige Verbindungsabschnitt (19) radial außerhalb der Sitze liegt und vorzugsweise den Bügeln (16) gegenüberliegt.

3. Planetenträger (5) nach Anspruch 1 oder 2, **dadurch gekennzeichnet, dass** der ringförmige Verbindungsabschnitt (19) des Abtriebsglieds (8) und die Flanke (9) durch Verschweißen oder Verlöten zusammengefügt sind.

4. Planetenträger (5) nach einem der Ansprüche 1 bis 3, **dadurch gekennzeichnet, dass** die Bügel (16) sich von den radial äußeren Umfängen der Flanken (9, 10) ausgehend axial erstrecken.

5. Planetenträger (5) nach Anspruch 4, **dadurch gekennzeichnet, dass** das Abtriebsglied (8) mit der entsprechenden Flanke (9) entlang eines ringförmigen Bereichs (17, 20) verbunden ist, der sich nur am radial äußeren Umfang der Flanke (9) befindet.

6. Planetenträger (5) nach einem der Ansprüche 1 bis 5, **dadurch gekennzeichnet, dass** der Verbindungsabschnitt (19) eine ringförmige Randleiste (20) aufweist, die sich axial erstreckt und von der das freie Ende mit der entsprechenden Flanke (9) verbunden ist.

7. Planetenträger (5) nach einem der Ansprüche 1 bis 6, **dadurch gekennzeichnet, dass** die Bügel (16) und die Flanken (9, 10) aus einem Stück hergestellt sind.

8. Untersetzungsgetriebe mit Planetengetriebe (1), insbesondere für Turbotriebwerke von Flugzeugen, enthaltend einen Planetenträger (5) nach einem der Ansprüche 1 bis 7.

## Claims

1. A planet carrier (5) for an epicyclic speed reduction gear, comprising an annular cage (7) comprising two sides (9, 10) extending radially and linked by bridges (16), seats (6) extending axially between the sides (9, 10) and being intended to support planet gears (4) mounted rotating about the seats (6), **characterized in that** one (9) of the sides (9, 10) of the cage (7) is irremovably fixed to a torque output member (8) in such a way as to form a single structural assembly, and **in that** the torque output member (8) comprises an axially extending tubular portion (18), one end of which is extended by an annular linking portion (19) extending radially and linked to the matching side (9) of the cage (7), for example by welding or brazing, both sides (9, 10) having the same radial stiffness and the same torsional stiffness.

2. A planet carrier (5) according to claim 1, **characterized in that** said annular linking portion (19) is located radially outside the seats, preferably opposite the bridges (16).

3. A planet carrier (5) according to claim 1 or 2, **characterized in that** the annular linking portion (19) of the torque output member (8) and the side (9) are assembled together by welding or brazing.

4. A planet carrier (5) according to one of claims 1 to 3, **characterized in that** the bridges (16) extend axially from the radially outer peripheries of the sides (9, 10).

5. A planet carrier (5) according to claim 4, **characterized in that** the torque output member (8) is linked to the matching side (9) along an annular zone (17, 20) located on the radially outer periphery of said side (9) only.

6. A planet carrier (5) according to one of claims 1 to 5, **characterized in that** the linking portion (19) has an axially extending annular rim (20), the free end of which is linked to the matching side (9).

7. A planet carrier (5) according to one of claims 1 to 6, **characterized in that** the bridges (16) and the sides (9, 10) are made of one piece.

8. A planet carrier for an epicyclic speed reducer (1), more particularly for an aircraft turbine engine, comprising a planet carrier (5) according to one of claims 1 to 7.
